# EUROPEAN PATENT SPECIFICATION

(11) **EP 0 953 287 B1**
(45) Date of publication and mention of the grant of the patent: **02.07.2003**
(21) Application number: 99303303.4
(22) Date of filing: 28.04.1999
(51) Int. Cl.: A21C 3/02

(54) **An apparatus for stretching bread dough and the like**
Vorrichtung zum Ausstrecken von Brotteig oder dergleichen
Dispositif pour l'étirage de la pâte à pain ou similaire

(30) Priority: 28.04.1998 JP 13256098
(43) Date of publication of application: 03.11.1999
(73) Proprietor: RHEON AUTOMATIC MACHINERY CO., LTD., Utsunomiya-shi Tochigi-ken (JP)
(72) Inventor: Morikawa, Michio, c/o Rheon Automatic, Utsunomiya-shi, Tochigi-ken (JP)
(74) Representative: Leale, Robin George

(56) References cited:
- EP-A- 0 170 436
- EP-A- 0 740 902
- US-A- 4 178 147

## Description

This invention relates to apparatus for stretching a highly elastic material such as bread dough.

To stretch an elastic material, a stress higher than its yield point has customarily been applied to the material. However, the elasticity thus lost is not automatically recovered. Therefore, in the manual production of food, especially bread, that requires elasticity as an important quality, a skilled operation has always been necessary.

It follows that when bread is automatically produced by machinery, maintaining the elasticity of the bread dough is frequently troublesome. Moreover, if even a little of the elasticity is lost, it is difficult to produce bread having a taste like that of bread made by a skilled artisan. Therefore, potassium bromate and the like have been mixed in the material as chemical additives, and the stretched bread dough has then been put in a rest condition to enable the elasticity (membrane-forming function) lost due to the effect of the machinery to be recovered.

Thus, the conventional method of stretching bread dough by machinery caused its inherent elasticity to be partly lost. Further, if a twisting stress is applied to the bread dough by a screw mechanism, this breaks the gluten's gel structure so as also to cause the elasticity to be partly lost. To recover it, as previously mentioned, chemical additives have been added to the bread dough. However, the taste was then inferior to that of manually prepared bread. In any event, using chemical additives is regarded as an unnatural solution to the problem.

Therefore, we disclosed in EP-A-740902 an apparatus whereby highly viscous and elastic dough can be stretched into a thin sheet of dough, by means of planetary rollers that travel around a circular orbit while rotating about their own axes. Below the rollers a curved gap is provided between the rollers and a conveying device, the gap gradually narrowing from the dough inlet to the dough outlet. The conveying device comprises a plurality of rollers whose peripheral speed is gradually increased from the inlet to the outlet.

It has been found that this apparatus can sufficiently stretch bread dough even when it has a high viscosity and high elasticity. However, as the conveying device comprises a plurality of rollers, due to the spaces between adjacent rollers, a continuous and generally flat conveying surface is not provided. Therefore, part of the bread dough tends to hang down between the adjacent rollers. Thus, sufficient stretching of the bread dough cannot be achieved, and this leads to a wrinkled sheet of bread dough, whereby a sufficiently uniform and thick sheet of bread dough is not obtained.

According to the present invention there is provided apparatus for stretching bread dough or the like, comprising:
a rotatable member that includes a plurality of planetary rollers arranged to travel along a circular orbit, each said roller being freely rotatable about its axis:
a conveying device provided below said rotatable member to define therewith a first gap in which dough is pressed, said first gap gradually narrowing from an inlet for bread dough to an outlet, said conveying device including a plurality of conveying rollers; and
a speed-setting device for individually controlling the rotational speed of at least some of the said conveying rollers so that their rotational speeds increase from the upstream end to the downstream end;
characterized by:
an arcuate plate provided downstream of said conveying rollers and below said rotatable member to define therewith a second gap in which the bread dough is pressed.

Thus, as compared with the apparatus disclosed in EP-A-740902, an arcuate plate is provided in place of a conveying roller or rollers, whereby the bread dough can be effectively and uniformly stretched on the plate by the planetary rollers. This results in homogeneous bread dough having a uniform thickness and inner layers that do not include any large bubbles.

In use, the said freely rotatable orbiting rollers periodically vibrate the bread dough so as to generate a temporary fluid phenomenon that is called a thixotropic effect. During the short period when this effect appears, the bread dough is stretched by means of tensile stress so as to produce a continuous sheet of bread dough with its gel structure unbroken. This sheet of bread dough can be wound up to make a roll of continuous rod-like bread dough having a diameter that can be varied. This sheet can then be cut into predetermined lengths so as to complete the dividing stage of the sheet of bread dough.

The fluid property, which is one of the effects of the thixotropy, is reversible. Therefore, bread dough which has been thinly stretched by means of this effect tends to recover its original elasticity within a few minutes after being put in a rest condition. Therefore, as compared with the conventional dividing method, whereby the elastic structure is broken, the apparatus of this invention can produce a thinly stretched sheet of dough without losing the membrane-forming function.

The said arcuate plate may be arranged to provide a continuous and generally flat conveying surface. Thus, the bread dough can be effectively and uniformly stretched on the arcuate plate by the planetary rollers. This results in the sheet of bread dough having a desired thickness. Further, the inner layers of the bread dough are homogeneous and have no large bubbles.

Some embodiments of the invention will now be described by way of example and with reference to the accompanying drawings, in which:
Fig. 1 is a side view of a first embodiment of the invention;
Fig. 2 is a front view in cross section of the apparatus of Fig. 1;
Fig. 3 is a front view in cross section of a second embodiment;
Fig. 4 is a perspective view of an arcuate plate positioned downstream of the conveying rollers; and
Fig. 5 is a side view of a third embodiment.

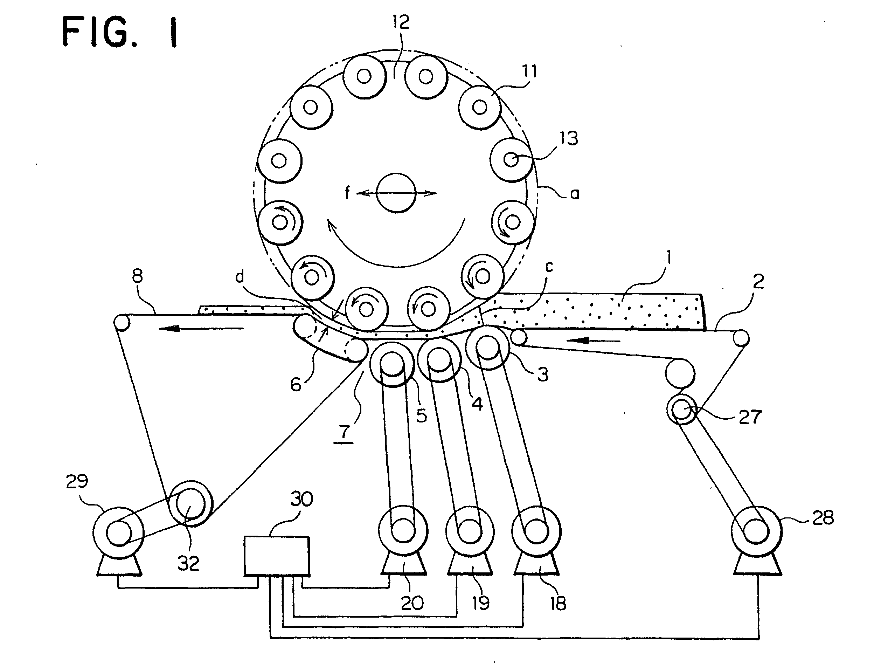

Referring first to Fig. 1, a conveying device 7 is provided. This includes a supply conveyor 2 to convey bread dough 1, a plurality of conveying rollers 3, 4, and 5, and an arcuate plate 6 positioned downstream of the roller 5. The supply conveyor 2 is driven through a pulley 27 by a motor 28. The speed of rotation of the motor 28 can be adjusted by an inverter 30. A discharge conveyor 8 is driven through a pulley 32 by a motor 29. The belt of the conveyor 8 slides on the surface of the plate 6. The speed of rotation of the motor 29 can also be adjusted by the inverter 30.

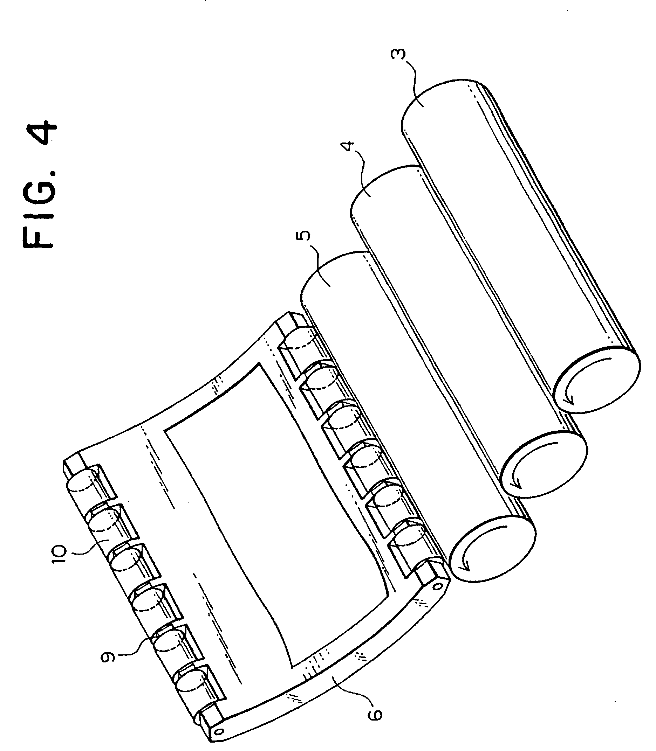

As shown in Fig. 4, the arcuate plate 6 has shafts 9 at the front and back edges of the plate. A plurality of cylindrical bodies 10 are freely and rotatably mounted on the shafts 9. The cylindrical bodies 10 function to achieve smooth operation of the discharge conveyor 8.

The number of conveying rollers can be increased from three to five. In that case the length of the plate 6 can be decreased in response to the kind of bread dough to be stretched.

Above the conveying device, a plurality of planetary rollers 11 are provided, at least one of which is always above the arcuate plate 6.

The planetary rollers 11 are freely rotatably mounted on shafts 13, which are securely mounted on a wheel 12. The shafts 13 are arranged parallel to the conveying device 7. Therefore, the planetary rollers 11 can be positioned parallel to the conveying device 7.

The wheel 12 is securely mounted on a drive shaft 15, which is supported by a frame 14. The wheel 12 is rotated through a gear device 16 by means of a motor 17.

The planetary rollers move on the surface of the bread dough 1 as they rotate, so as to stretch it and thereby reduce its thickness. A gap (c) is provided between an imaginary circle (a) described by the peripheries of the planetary rollers 11 and the conveying rollers 3, 4, and 5. The gap (c) decreases from the upstream end to the downstream end. Further, a gap (d) is provided between the imaginary circle (a) and the arcuate plate 6. In the gaps (c) and (d), the bread dough 1 is stretched by the planetary rollers 11.

The length of the arcuate plate 6 and the dimension of the gap (d) can be optionally changed in response to the characteristics of the bread dough, such as its degree of elasticity. For example, the gap (d) can be set so as to gradually increase or decrease from the upstream end to the downstream end, or to remain constant.

The rollers 3, 4, and 5 are rotated in the downstream direction through drive shafts (not shown) driven by motors 18, 19, and 20, respectively. The speed of rotation of the rotating members of the motors is adjustable by means of the inverter 30. The speed of rotation of each of the motors 18, 19, and 20 is adjustable individually by the inverter 30. Thus the rotational speeds of the rollers can be set so as to gradually increase in the downstream direction.

As stated above, in this embodiment the rotational speeds of rollers 3, 4, and 5 are gradually increased in the conveying direction. The increase in the rotational speeds of the rollers can be set inversely to the decrease in the dimension of the gap (c) in the downstream direction.

The rate of decrease of the gap (c), namely the compression rate, can be changed in response to the characteristics of the bread dough to be stretched, by changing the dimension of the gap. For example, this can be done by manually turning a handle 21 to move the wheel 12 in the direction (f).

The speed of the supply conveyor 2 is set to be the same as or less than that of the roller 3. The speed of the discharge conveyor 8 is set to be the same as or more than that of the roller 5.

The planetary rollers 11 can be disposed so that the distance between adjacent rollers is twice the distance between adjacent rollers 3 and 4, or rollers 4 and 5. This arrangement allows the generatrix of the planetary roller 11 and the generatrices of the rollers 3, 4, and 5 to generally and simultaneously oppose each other.

In, operation, bread dough 1 conveyed by the supply conveyor 2 is supplied to the conveying device 7. The bread dough 1 is stretched between the planetary rollers 11 and the rollers 3, 4, and 5, whose rotational speeds increase from upstream to downstream. The thickness of the bread dough 1 is then made uniform on the arcuate plate 6 by the operation of the planetary rollers 11. The uniformly-shaped bread dough 1 is then discharged by the discharge conveyor 8.

As the planetary rollers 11 pass above the rollers 3, 4, and 5, the planetary rollers 11 apply violent and repeated vibrations to the bread dough 1 so as to alternately compress and decompress it. This results in a thixotropic effect being generated, so that elastic bread dough which is of low fluidity in normal conditions temporarily becomes of high fluidity. The bread dough 1 of high fluidity is then readily stretched, as a result of the increasing rotational speeds of the rollers 3, 4, and 5.

Where the planetary rollers 11 pass above the rollers 3, 4, and 5 they are arranged so that they oppose the latter rollers and so that the generatrices of the planetary rollers 11 and the generatrices of the rollers 3, 4, and 5 coincide with each other at least at two locations. This results in a difference in the speeds of the peripheries of the two compressing portions, which leads to the bread dough being more effectively and thinly stretched.

Variation of the rotation speed of the wheel 12 permits optional adjustment of the beating effect (the thixotropic effect). Thus, the stretching ratio of the bread dough may be adjusted to achieve a desired production rate.

As previously mentioned, the thickness of the stretched bread dough 1 is made uniform on the arcuate plate 6 by the action of the planetary rollers 11. Thus the uniformity of the bread dough 1 is enhanced and the stretching efficiency is improved. If the arcuate plate 6 were not provided, the bread dough 1, which is stretched as a result of the different rotational speeds of the rollers 3, 4, and 5, would not be uniformly compressed, and wrinkled bread dough would be produced. Further, if the arcuate plate 6 were not provided, the bread dough stretched between the planetary rollers 11 and the rollers 3, 4, and 5 would tend to shrink laterally on the discharge conveyor 8 due to its elasticity, which is an inherent property of bread dough. This would result in the bread dough being undesirably thick.

However, if the stretched bread dough 1 is made uniform on the arcuate plate 6, which has a continuous and generally flat conveying surface, no wrinkled or shrunk bread dough will be produced, so that a desired thickness of bread dough can readily be achieved.

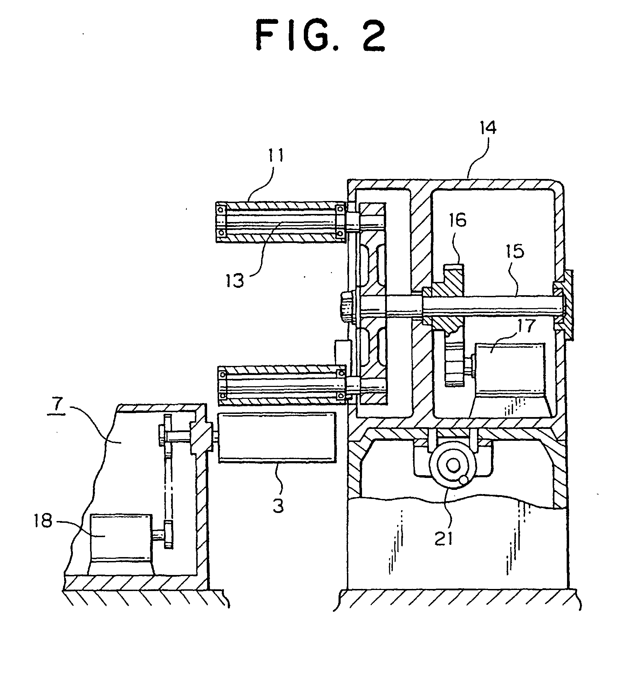

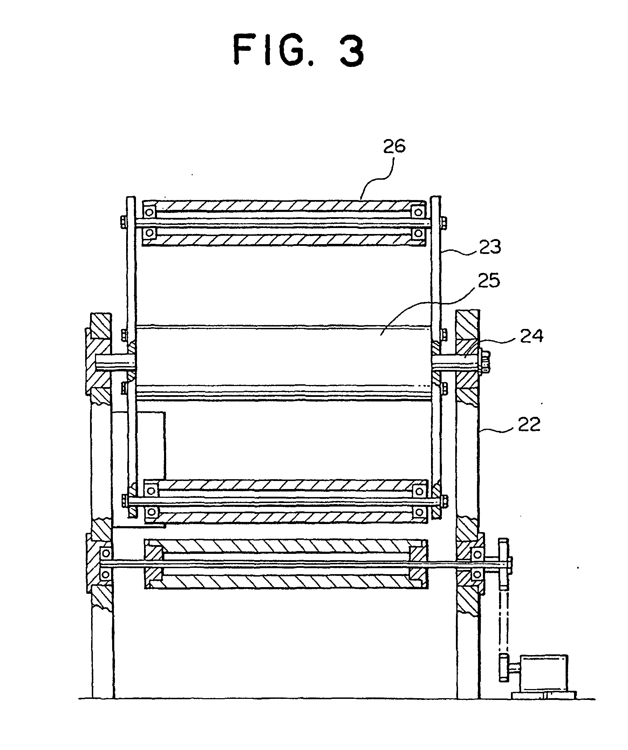

In a second embodiment, shown in Fig. 3, each planetary roller 26 is supported at both ends, as compared with first embodiment in which, as shown in Fig. 2, the rollers 26 are supported at only one end. A rotatable wheel 23, supported by a frame 22, has a main shaft provided with a motor pulley 25. Rotation of the motor pulley 25 causes the planetary rollers 26 to travel around an orbit. Other features are similar to the first embodiment.

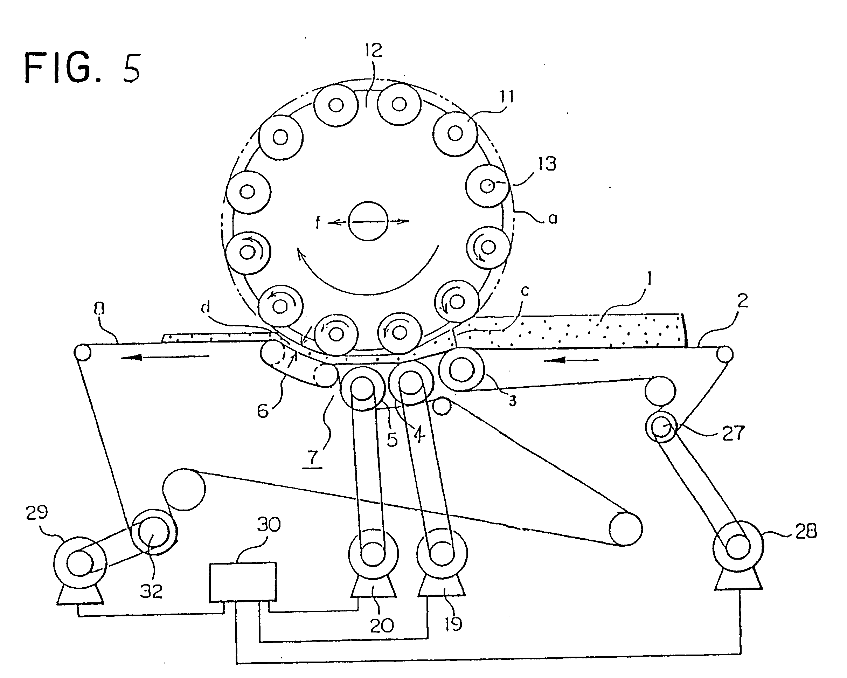

In a third embodiment, shown in Fig. 5, the belt of the discharge conveyor 8 is trained over four guide rollers. The belt of the supply conveyor 2 is trained over the roller 3, so that the roller 3 can be driven through the pulley 27 by the motor 28. The rotational speeds of the rollers 3, 4, and 5 are again gradually increased in the conveying direction, by means of the inverter 30. In this case the aforementioned plurality of rollers comprise the rollers 4 and 5 only.

In the above embodiments, the rotational speeds of the rollers 11 can be set at 30 to 70 m/minute. The planetary rollers 11 and the rollers 3, 4, and 5 beat about 1000 times/minute on the bread dough 1, which readily but temporarily shows a fluidity due to the thixotropic effect. Therefore, an efficient stretching that is unobtainable by the conventional stretching method can be achieved.

Thus, at least in preferred forms of the invention, when bread dough having a high viscosity and high elasticity is stretched, the thixotropic effect causes a temporary fluidity to occur, which leads to the bread dough being stretched while it is under a low pressure. This leads to an enhanced stretching action due to the different rotational speeds of the rollers 3, 4, and 5, and the conveyor 7. Thus a continuous and thin sheet of bread dough can readily be obtained under a low pressure, without the gluten tissue being broken. The arcuate plate 6 provides a continuous conveying surface positioned downstream of the plurality of rollers, and functions together with the planetary rollers to make the stretched bread dough uniform. Thus, the efficiency of stretching the bread dough is improved. Also, the bread dough has a uniform thickness and its inner layers do not include any large bubbles.

## Claims

1. Apparatus for stretching bread dough or the like, comprising:
a rotatable member that includes a plurality of planetary rollers (11) arranged to travel along a circular orbit, each said roller being freely rotatable about its axis:
a conveying device (7) provided below said rotatable member to define therewith a first gap (c) in which dough is pressed, said first gap gradually narrowing from an inlet for bread dough to an outlet, said conveying device including a plurality of conveying rollers (3,4,5); and
a speed-setting device (30) for individually controlling the rotational speed of at least some of the said conveying rollers so that their rotational speeds increase from the upstream end to the downstream end;
**characterized by**:
an arcuate plate (6) provided downstream of said conveying rollers and below said rotatable member to define therewith a second gap (d) in which the bread dough is pressed.

2. Apparatus as claimed in claim 1, wherein the belt of a conveyor (8) slides on the surface of said arcuate plate (6).

3. Apparatus as claimed in claim 1 or 2, wherein the dimension of said second gap (d) decreases from the upstream end to the downstream end.

4. Apparatus as claimed in claim 1 or 2, wherein the dimension of said second gap (d) increases from the upstream end to the downstream end.

5. Apparatus as claimed in claim 1 or 2, wherein the dimension of said second gap (d) is substantially constant.

## Patentansprüche

1. Vorrichtung zum Strecken von Brotteig oder dergleichen, mit einem rotierbaren Element, welches eine Mehrzahl von Planetenrollen (11) aufweist, die derart angeordnet sind, daß sie sich längs einer Kreisbahn bewegen, wobei jede Rolle um ihre Achse frei drehbar ist,
einer unterhalb des drehbaren Elements angeordneten Fördereinrichtung (7), die mit dem Element einen ersten Spalt (c) definiert, in welchen Teig gedrückt wird, wobei dieser erste Spalt sich von einem Einlaß für den Brotteig bis zu einem Auslaß verengt und die Fördereinrichtung eine Mehrzahl von Förderrollen (3,4,5) besitzt, sowie mit
einer Geschwindigkeitseinstelleinrichtung (30) zur individuellen Steuerung der Drehgesohwindigkeit zumindest einiger der Förderrollen, derart, daß ihre Drehgeschwindigkeiten vom Stromaufwärtigen Ende zum stromabwärtigen Ende anwachsen, **gekennzeichnet durch**
eine stromabwärts von den Förderrollen und unterhalb des rotierbaren Elements angeordnete gebogene Platte (6) zur Definition eines zweiten Spalts (b) mit dem Element, in welchem Spalt Brotteig gepreßt wird.

2. Vorrichtung nach Anspruch 1, bei welcher das Band eines Förderers (8) auf der Oberfläche der bogenförmigen Platte (6) gleitet.

3. Vorrichtung nach Anspruch 1 oder 2, bei welcher die Größe des zweiten Spalts (d) vom stromaufseitigen Ende zur stromabwärtigen Seite hin abnimmt.

4. Vorrichtung nach Anspruch 1 oder 2, bei welcher die Größe des zweiten Spalts (d) vom stromaufwärtigen Ende zum stromabwärtigen Ende hin zunimmt.

5. Vorrichtung nach Anspruch 1 oder 2, bei welcher die Größe des zweiten Spalts (d) im wesentlichen konstant ist.

## Revendications

1. Appareil pour étirer de la pâte à pain ou analogue, comportant :
un élément rotatif qui comprend une pluralité de rouleaux planétaires (11) agencés de façon à parcourir une orbite circulaire, chaque rouleau pouvant tourner librement autour de son axe ;
un dispositif de transport (7) prévu en dessous dudit élément rotatif pour définir avec lui un premier espace (c) dans lequel de la pâte est pressée, ledit premier espace rétrécissant progressivement depuis une entrée pour la pâte à pain vers une sortie, ledit dispositif de transport comprenant une pluralité de rouleaux de transport (3, 4, 5) ; et
un dispositif (30) de réglage de vitesse destiné à régler individuellement la vitesse de rotation d'au moins certains desdits rouleaux de transport afin que leurs vitesses de rotation augmentent de l'extrémité d'amont vers l'extrémité d'aval ;
**caractérisé par** :
une plaque incurvée (6) située en aval desdits rouleaux de transport et en dessous dudit élément rotatif pour définir avec lui un second espace (d) dans lequel la pâte à pain est pressée.

2. Appareil selon la revendication 1, dans lequel la bande d'un transporteur (8) glisse sur la surface de ladite plaque incurvée (6).

3. Appareil selon la revendication 1 ou 2, dans lequel la dimension dudit second espace (d) diminue de l'extrémité d'amont vers l'extrémité d'aval.

4. Appareil selon la revendication 1 ou 2, dans lequel la dimension dudit second espace (d) augmente de l'extrémité d'amont vers l'extrémité d'aval.

5. Appareil selon la revendication 1 ou 2, dans lequel la dimension dudit second espace (d) est sensiolement constante.
